# NEUE EUROPÄISCHE PATENTSCHRIFT

(11) **EP 2 280 186 B2**
(45) Veröffentlichungstag und Bekanntmachung des Hinweises auf die Entscheidung über den Einspruch: **03.05.2023**
(45) Hinweis auf die Patenterteilung: 15.03.2017
(21) Anmeldenummer: 10170493.0
(22) Anmeldetag: 22.07.2010
(51) Int. Cl.: F16F 9/04, F16F 9/05

(54) **Luftbalg für eine Luftfeder**
Air bellows for a pneumatic spring
Soufflet pour un ressort à air

(30) Priorität: 31.07.2009 DE 102009028158
(43) Veröffentlichungstag der Anmeldung: 02.02.2011
(73) Patentinhaber: SAF-HOLLAND GmbH, 63856 Bessenbach (DE)
(72) Erfinder: Hock, Helmut, 63856, Bessenbach (DE)
(74) Vertreter: Müller Schupfner & Partner Patent- und Rechtsanwaltspartnerschaft mbB

(56) Entgegenhaltungen:
- EP-A2- 0 062 112
- DE-A1- 2 064 751
- DE-A1- 19 809 658
- FR-A1- 2 448 661
- GB-A- 807 535

## Beschreibung

Die vorliegende Erfindung betrifft einen Luftbalg für eine Luftfeder, insbesondere für eine Luftfeder eines Nutzfahrzeugs, eine einen solchen Luftbalg aufweisende Luftfeder.

Herkömmlicherweise besitzt eine Fahrzeugachse eines Nutzfahrzeuges einen Achskörper, der einseitig mittels zumindest eines Längslenkers ein Achsaggregat bildet und daher am Fahrzeugrahmen beweglich angelenkt ist und gegenüber dem Fahrzeugrahmen durch jeweils eine über oder hinter dem Kreuzungsbereich von Achskörper und Längslenker angeordnete Luftfeder abgestützt ist. Die Luftfeder ihrerseits umfasst einen zwischen einem Deckel und einer Grundplatte angeordneten Luftbalg, wobei für eine mechanische Kopplung zwischen dem Luftbalg einerseits und dem Achsaggregat andererseits ein am Luftbalg angeordneter Tauchkolben vorgesehen ist. Der Luftbalg ist an seinem achsseitigen Bereich mit dem Tauchkolben verbunden, wobei eine Außenfläche des Tauchkolbens dem Luftbalg als Abrollfläche dient, so dass eine geführte Bewegung des Luftbalgs im Betrieb bei der Auf- und Abbewegung des Tauchkolbens gewährleistet ist.

Für eine Kran- und Bahnverladung sind solche Luftfedern jedoch nur bedingt geeignet, da durch das Gewicht der dann unter dem Fahrzeug hängenden Achse der Luftbalg ohne weitere Haltevorrichtungen vollständig ausgerollt wird, wodurch in dem Luftbalg ein Unterdruck gegenüber der Umgebung erzeugt wird. Beim Absetzen des Fahrzeugs besteht die Gefahr, dass der Luftbalg nach innen einfaltet bzw. gegen den Tauchkolben verkippt bzw. einfaltet und daher nicht betriebsmäßig über den Tauchkolben abrollt, was Beschädigungen zur Folge haben kann.

Um dieses Problem zu umgehen, wird daher herkömmlicherweise bei der Kran- und Bahnverladung der Federweg der Luftfeder anhand einer an dem Fahrzeugrahmen befestigten Spann- bzw. Fangvorrichtung begrenzt oder ein geteilter Tauchkolben verwendet. Alternativ kann die Luftfeder auch derart ausgebildet sein, dass die Luftfeder lösbar mit dem Aufbau verbunden ist und bei einer Kranverladung des Anhängers mittels eines Rückstellgliedes die Luftfeder von dem Aufbau getrennt wird und mittels des Rückstellgliedes der Deckel und so auch der Federbalg bezüglich des Tauchkolbens in einer definierten Position gehalten werden, so dass der Federbalg über den Tauchkolben abrollt bzw. in einem abgerollten Zustand gehalten wird.

Der Erfindung liegt die Aufgabe zugrunde, einen Luftbalg sowie eine diesen aufweisende Luftfeder bereitzustellen, welche in einfacher Weise für eine Kranverladung von Fahrzeugen geeignet ist.

Diese Aufgabe wird gelöst durch einen Luftbalg gemäß Anspruch 1, eine Luftfeder gemäß Anspruch 10. Bevorzugte Ausführungsformen sind Gegenstand der abhängigen Ansprüche.

Gemäß der vorliegenden Erfindung wird ein Luftbalg für eine Luftfeder insbesondere eines Nutzfahrzeugs gemäß Anspruch 1 bereitgestellt, mit einem achsseitigen Bereich, einem aufbauseitigen Bereich und einem dem aufbauseitigen Bereich benachbarten Mittelabschnitt, wobei der achsseitige Bereich an einem Tauchkolben anordenbar und durch eine Ein- bzw. Ausfederbewegung zwischen einer ersten, eingefederten, Position und einer zweiten, ausgefederten, Position bewegbar ist, und zumindest ein Teil des Mittelabschnitts verstärkt und/oder versteift ist. Der Mittelabschnitt ist derjenige Teil des Luftbalgs, der durch die Ein- bzw. Ausfederbewegung nicht ein- oder ausgerollt wird bzw. werden kann.

Die FR 2 448 661 und die DE 2 064 751 zeigen aus Gummi hergestellte Rollbälge für eine Fahrzeug-Luftfederung, wobei zwischen Befestigungswulsten eingebettete, fadenförmige Festigkeitsträger eingebaut sind.

Die EP 0 062 112 bezieht sich auf einen Rollbalg für Luftfedern zur Aufhängung von Fahrzeugachsen an Kraftfahrzeugen, welcher mindestens zwei Einsätze aufweist, die einander kreuzende Fasern enthalten.

Die DE 1 98 09 658 A1 betrifft eine Luftfeder bestehend aus einem Rollbalg, der zwischen zwei Anschlussteilen angeordnet und mithilfe von Befestigungselementen an diesem befestigt ist.

Die GB 807,535 A betrifft eine Luftfeder für Kraftfahrzeuge, mit einem Mittelabschnitt eines Luftbalges welcher ein Verstärkungselement aufweist. Das Verstärkungselement ist dabei aus Metall ausgebildet.

Der Erfindung liegt die Aufgabe zugrunde, einen Luftbalg sowie eine diesen aufweisende Luftfeder bereitzustellen, welche in einfacher Weise für eine Kranverladung von Fahrzeugen geeignet ist.

Diese Aufgabe wird geiöst durch einen Luftbalg gemäß Anspruch 1, eine Luftfeder gemäß Anspruch 10. Bevorzugte Ausführungsformen sind Gegenstand der abhängigen Ansprüche.

Gemäß der vorliegenden Erfindung wird ein Luftbalg für eine Luftfeder insbesondere eines Nutzfahrzeugs gemäß Anspruch 1 bereitgestellt, mit einem achsseitigen Bereich, einem aufbauseitigen Bereich und einem dem aufbauseitigen Bereich benachbarten Mittelabschnitt, wobei der achsseitige Bereich an einem Tauchkolben anordenbar und durch eine Ein- bzw. Ausfederbewegung zwischen einer ersten, eingefederten, Position und einer zweiten, ausgefederten, Position bewegbar ist, und zumindest ein Teil des Mittelabschnitts verstärkt und/oder versteift ist. Der Mittelabschnitt ist derjenige Teil des Luftbalgs, der durch die Ein- bzw. Ausfederbewegung nicht ein- oder ausgerollt wird bzw. werden kann.

Unter dem Begriff "Nutzfahrzeug" im Sinne dieser Erfindung sollen nicht nur Zugfahrzeuge wie beispielsweise LKWs oder Sattelzugmaschinen verstanden werden, sondern auch deren Anhänger bzw. Sattelauflieger. Die achsseitige Lagerung der Luftfeder kann unterschiedlich positioniert sein. Die achsseitige Lagerung kann eine Tauchkolbenbefestigung oder ein Luftfederträger sein. Der Luftfederträger kann beispielsweise an einem Lenker des Achsaggregats angeordnet sein. Der achsseitige Bereich des Luftbalgs im Sinne dieser Erfindung ist der Endbereich des Luftbalgs, der mittels des Tauchkolbens und gegebenenfalls weiterer Anordnungsmittel mit der achsseitigen Lagerung der Luftfeder verbunden ist, d.h. der Bereich des Luftbalgs, der an dem Tauchkolben angeordnet ist. Der aufbauseitige Bereich des Luftbalgs ist der Bereich des Luftbalgs, welcher mittels eines Deckels und gegebenenfalls weiterer Anordnungsmittel mit dem Aufbau verbunden ist. Ein erfindungsgemäßer Luftbalg kann sich in verschiedenen Zuständen befinden. In einem Grundzustand des Luftbalgs wirken keine äußeren Fremdkräfte wie beispielsweise Zug-, Schub- und/oder Scherkräfte auf den Luftbalg ein. Insbesondere ist der Grundzustand des Luftbalgs der Zustand, in dem sich der Luftbalg befindet, wenn der in einer Luftfeder eingebaute Luftbalg beispielsweise einmal mittels Pressluft aufgeblasen wird und die Pressluft anschließend wieder aus der Luftfeder abgelassen wird, d.h. dass in dem Inneren der Luftfeder wieder Umgebungsdruck herrscht. Im Grundzustand wird an der Luftfeder nach dem Aufblasen, abgesehen von ihrer eigenen Gewichtskraft, keine weitere Kraft angelegt. Der Luftbalg kann auch verschiedene Betriebszustände aufweisen. Einer dieser Betriebszustände liegt beispielsweise vor, wenn die Luftfeder im herkömmlichen Betrieb angeordnet ist, wobei beispielsweise der Innendruck in dem Luftbalg von dem Umgebungsdruck verschieden ist. Ein solcher Betriebszustand liegt beispielsweise dann vor, wenn sich das Fahrzeug im herkömmlichen Einsatz befindet. Im Einsatz kann der Luftbalg im Zuge von Ein- und Ausfederbewegungen in eine erste Position, in welcher er - ggf. sogar vollständig - eingefedert ist, sowie in eine zweite Position, in welcher er - ggf. sogar vollständig - ausgefedert ist, bewegt werden. Ein anderer Betriebszustand ist ein Zustand, in dem der Luftbalg entlüftet ist, wenn beispielsweise das Gerät, wie z.B. ein Anhänger eines LKWs, an dem die Luftfeder angeordnet ist, für längere Zeit geparkt ist. In diesem Fall herrscht in dem Inneren des Luftbalgs, wie im Grundzustand, der Umgebungsdruck, und der Luftbalg befindet sich in der ersten Position. In diesem Betriebszustand des Luftbalgs ist die Länge der Luftfeder regelmäßig kleiner als die Länge der Luftfeder im Grundzustand des Luftbalgs. Weiterhin kann der Luftbalg einen Verladezustand aufweisen, wobei der Verladezustand dann vorliegt, wenn das Fahrzeug beispielsweise auf einen Eisenbahnwaggon kranverladen wird, d.h. das Achsaggregat an der Luftfeder hängt. In diesem Fall befindet sich der Luftbalg in der zweiten Position. In dem Verladezustand des Luftbalgs ist die Luftfeder entlang ihrer Mittellinie gemessen regelmäßig länger als in dem Grundzustand des Luftbalgs. Wird die Luftfeder im Betriebszustand des Luftbalgs mit einem sehr hohen Innendruck beaufschlagt, ist es auch möglich, dass die Luftfeder die gleichen Abmessungen aufweist wie im Verladezustand des Luftbalgs. Der Luftbalg kann sich auch dann in seinem Grundzustand befinden, wenn er beispielsweise von dem Tauchkolben entkoppelt ist, d.h. beispielsweise der Luftbalg alleine gelagert ist. Wird ein Anhänger, an welchem die Luftfeder angeordnet ist, auf einen Bahnwaggon, eine Fähre oder ähnliches verladen, wird beim Anheben des Anhängers über das Chassis bzw. den Aufbau aufgrund des Achsgewichtes der Luftbalg im Wesentlichen vollständig gestreckt. Dabei wird einerseits durch die Verstärkung und/oder Versteifung des Mittelabschnitts zuverlässig verhindert, dass sich der Luftbalg in diesem Mittelabschnitt bei einem Balgunterdruck oder nicht ausreichendem Druck im Luftbalg undefiniert einfaltet bzw. verkippt und eventuell beschädigt wird. Andererseits wird die Ein- und Ausrollbewegung des Luftbalgs nicht behindert, da sich die Verstärkung und/oder Versteifung nur oder zumindest im Wesentlichen nur in demjenigen Teil des Luftbalgs befindet, der ohnehin beim Ein- und Ausfedern nicht nach innen umgefaltet bzw. gerollt wird. Dieser Teil wird als Mittelabschnitt bezeichnet. Somit ist jederzeit ein funktionssicheres Abrollen des Luftbalgs auf dem Tauchkolben auch ohne Druckbeaufschlagung des Luftbalgs gewährleistet. Bei einem Aufsetzen des Anhängers auf den Bahnwaggon bzw. auf die Fähre ist der Luftbalg durch die Verstärkung und/oder Versteifung im Mittelabschnitt außerdem so ausgelegt, dass er automatisch wieder den vor dem Anheben bestehenden Zustand einnimmt. Dieser Zustand kann beispielsweise der Grundzustand sein, wenn insbesondere der Luftbalg entlüftet ist, bzw. ein von dem Grundzustand abweichender Zustand, wenn der Luftbalg beispielsweise mit einem Innendruck beaufschlagt ist. In anderen Worten kann der Luftbalg bei einer Verladung des Anhängers auf einen Bahnwaggon bzw. eine Fähre beim Anheben des Anhängers im Wesentlichen vollständig gestreckt werden. Wird der Anhänger auf dem Bahnwaggon bzw. der Fähre abgesetzt, rollt der Luftbalg über den Tauchkolben ab, auch wenn lediglich ein geringer Innendruck in dem Luftbalg vorherrscht. Ein Verkippen bzw. Einfalten des Luftbalgs wird durch die Verstärkung und/oder Versteifung des Mittelabschnitts des Luftbalgs verhindert. Vorteilhafterweise ist es erfindungsgemäß daher nicht notwendig, den maximalen Ausfederweg beim Verladen, beispielsweise anhand eines Fangseils als bevorzugte Fang- bzw. Spannvorrichtung, zu begrenzen. Insbesondere ist es vorteilhafterweise auch nicht notwendig, den Tauchkolben geteilt auszubilden. Vielmehr werden aufgrund des erfindungsgemäßen Luftbalges die Probleme des Standes der Technik in einfacher Weise gelöst.

Gemäß des erfindungsgemäßen Luftbalgs ist der Mittelabschnitt im Wesentlichen über seine gesamte Bauhöhe verstärkt, wobei diese Verstärkung insbesondere eine Versteifung darstellt. Unter "Bauhöhe" ist derjenige Teil des Luftbalgs in seinem vollständig eingefederten Zustand zu verstehen, der nicht nach innen umgefaltet bzw. umgelenkt werden kann. Der Luftbalg muss nicht vollständig versteift und/oder verstärkt sein, sondern kann an seinem oberen Ende - also dem aufbauseitigen Bereich - und an seinem im vollständig eingefederten Zustand unten befindlichen Bereich, in dem er für das Umfalten nach innen beweglich sein muss, keinerlei Verstärkung bzw. Versteifung aufweisen. Durch das Vorsehen der Verstärkung bzw. Versteifung über die gesamte Bauhöhe kann sichergestellt werden, dass die Verstärkung/Versteifung sehr gleichmäßig erfolgt.

Es ist besonders bevorzugt, die Verstärkung bzw. Versteifung so vorzusehen, dass sich der Durchmesser des Luftbalgs im Mittelabschnitt im Zuge der Ein- bzw. Ausfederbewegung nicht wesentlich ändert, also seine zylindrische Form mit dem im Grundzustand gegebenen Durchmesser auch beim Übergang in einen der Betriebszustände im Großen und Ganzen beibehält. "Nicht wesentlich ändern" bedeutet in diesem Zusammenhang, dass der Luftbalg zwar eine gewisse Flexibilität aufweist, sich jedoch keinesfalls bei der Einfederbewegung übermäßig stark nach innen einknicken bzw. einfalten lässt.

Weiterhin vorzugsweise weist der Mittelabschnitt eine größere Wandstärke auf als der restliche Luftbalg. Durch diese Verdickung weist der Luftbalg im Mittelabschnitt eine größere Steifigkeit auf und verformt sich nicht so leicht, d.h. er wird insbesondere nicht so leicht nach innen eingefaltet. Alternativ oder zusätzlich kann der Mittelabschnitt auch aus einem festeren, also steiferen, Material gebildet sein.

Bevorzugt ist der Luftbalg im Bereich des Mittelabschnitts mehrlagig aufgebaut. Besonders bevorzugt ist der Mittelabschnitt mit Gewebelagen beispielsweise aus Metallgewebe und/oder Kunststoffgewebe und/oder Textilgewebe verstärkt, wobei die Gewebelagen auch über den Bereich des Mittelabschnitts hinausragen können.

Besonders bevorzugt ist der Luftbalg im Mittelabschnitt zumindest bereichsweise mit Gewebelagen bzw. Verstärkungslagen verstärkt, welche die radiale Steifheit des Luftbalgs an dieser Stelle erhöhen. Insbesondere sind diese Gewebelagen geschlossene Zylinderabschnitte, welche in den Luftbalg eingebettet sind und beispielsweise eine Höhe von etwa 1 cm bis zur Längsabmessung des Mittelabschnitts, bevorzugt von etwa 3 cm bis etwa 8 cm, besonders bevorzugt von etwa 5 cm, aufweisen.

Besonders bevorzugt ist der Luftbalg aus Gummi oder aus Elastomerwerkstoffen mit vergleichbaren Materialeigenschaften gebildet.

In den Gummi bzw. die Elastomerwerkstoffe sind dabei Versteifungslagen eingebettet bzw. eingearbeitet, welche aus einem elastischen Material bestehen.

Erfindungsgemäß ist der Mittelabschnitt aus Gummi aufgebaut, an dem zumindest ein Verstärkungselement fest angebracht ist, wobei ein Anvulkanisieren vorgesehen ist. Hierdurch kann der Luftbalg besonders einfach hergestellt werden, da zumindest ein Verstärkungselement gewünschtenfalls nachträglich angebracht werden kann.

Zusätzlich kann es vorteilhaft sein, wenn der Mittelabschnitt aus Gummi aufgebaut ist, in den zumindest ein Verstärkungselement einvulkanisiert ist. Dies bietet den Vorteil, dass dann das Verstärkungselement vollständig vom Gummi umgeben ist.

Das zumindest eine Verstärkungselement ist aus mehreren Ringen oder Ringsegmenten gebildet. Dadurch lässt sich die Verstärkung bzw. Versteifung in der Längsachse des Luftbalgs unterschiedlich auslegen. Beim Einsatz von Ringsegmenten, die sich also jeweils nicht über den gesamten Umfang des Luftbalgs erstrecken, lässt sich darüber hinaus auch eine gewisse radiale Dosierung bzw. eine Einstellung in Umfangsrichtung der Flexibilität des Luftbalgs vornehmen.

Vorzugsweise ist in den Mittelabschnitt ein Ring aus einem Metall eingearbeitet. Insbesondere ist der Ring aus dem Metall im Bereich des achsseitigen Endes des Mittelabschnitts in den Luftbalg eingearbeitet, wodurch derjenige Bereich des Mittelabschnitts besonders verstärkt wird, der dem einrollbaren Bereich des Luftbalgs benachbart ist.

Ein zusätzlicher Aspekt der vorliegenden Erfindung umfasst eine Luftfeder mit einem Tauchkolben und einem erfindungsgemäßen Luftbalg.

Vorzugsweise ist der Tauchkolben der Luftfeder einteilig ausgebildet. Dadurch ist eine kostengünstige Herstellung möglich.

Ein weiterer Aspekt betrifft ein Verfahren zur Herstellung eines Luftbalgs mit einem achsseitigen Bereich, einem aufbauseitigen Bereich und einem dem aufbauseitigen Bereich benachbarten Mittelabschnitt. Das Verfahren umfasst folgende Schritte: Vorfertigen des Luftbalgs; Formen des Luftbalgs derart, dass dessen achsseitiger Bereich an einem Tauchkolben einer Luftfeder angeordnet und durch eine Ein- bzw. Ausfederbewegung zwischen einer ersten eingefederten, Position und einer zweiten, ausgefederten, Position bewegt werden kann, wobei der Mittelabschnitt durch die Ein- bzw. Ausfederbewegung nicht ein- bzw. ausgerollt werden kann; Verstärken und/oder Versteifen zumindest eines Teils des Mittelabschnitts; und Endfertigen des Luftbalgs.

Weitere Vorteile und Merkmale der Erfindung ergeben sich aus der nachfolgenden Beschreibung von vorteilhaften Ausführungsformen mit Bezug auf die beigefügten Figuren, wobei einzelne Merkmale von einzelnen Ausführungsformen zu neuen Ausführungsformen kombiniert werden können. Es zeigen:
- Fig. 1: eine schematische Schnittansicht einer nicht erfindungsgemäßen Ausführungsform des erfindungsgemäßen Luftbalgs einer Luftfeder in vollständig eingefederter Position;
- Fig. 2: eine schematische Schnittansicht der ersten Ausführungsform in teilweise eingefederter Position;
- Fig. 3: eine schematische Schnittansicht der ersten Ausführungsform in vollständig ausgefederter Position;
- Fig. 4: in Schnittdarstellung eine zweite und eine dritte Ausführungsform des erfindungsgemäßen Luftbalgs;
- Fig. 5: in teilperspektivischer Darstellung eine vierte und eine fünfte Ausführungsform des erfindungsgemäßen Luftbalgs; und
- Fig. 6: in Schnittdarstellung eine sechste und eine siebte Ausführungsform des erfindungsgemäßen Luftbalgs.

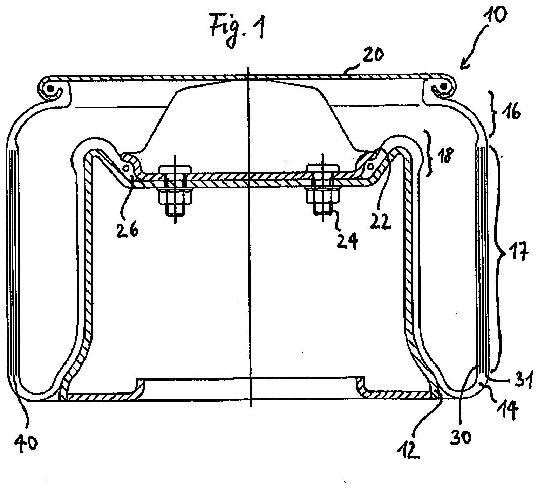

Fig. 1 zeigt eine Luftfeder 10. Die Luftfeder 10 umfasst einen Tauchkolben 12 sowie einen Luftbalg 14. Der Luftbalg weist einen aufbauseitigen Abschnitt bzw. aufbauseitigen Bereich 16 sowie einen achsseitigen Abschnitt bzw. achsseitigen Bereich 18 auf. Zwischen dem achsseitigen Bereich 18 und dem aufbauseitigen Bereich 16 ist ein Mittelabschnitt 17 vorgesehen, welcher dem aufbauseitigen Bereich 16 benachbart ist und somit von diesem weiter entfernt ist als von dem achsseitigen Bereich 18. Der Mittelabschnitt 10 erstreckt sich gemäß Darstellung im Wesentlichen über die gesamte Bauhöhe des Luftbalgs 14, wenn sich dieser in einer ersten vollständig eingefederten Position befindet. Wie ersichtlich, umfasst dabei der Mittelabschnitt 17 an seinem unteren Ende nicht denjenigen Bereich des Luftbalgs 14, in dem dieser nach innen umgefaltet ist. Außerdem umfasst der Mittelabschnitt 17 an seinem oberen Ende auch nicht denjenigen Teil des Luftbalgs 14, der sich nach innen erstreckt bzw. nach innen gekrümmt ist und eingangs schon als aufbauseitiger Bereich 18 bezeichnet wurde. Der aufbauseitige Abschnitt 16 ist anhand eines Deckels 20 geschlossen. Der Deckel 20 kann beispielsweise mit einem Aufbau eines Anhängers (in den Figuren nicht gezeigt) verbunden sein.

Der achsseitige Abschnitt 18 ist mittels einer Klemmvorrichtung 22 mit dem Tauchkolben 12 verbunden. Es ist bevorzugt, dass die Klemmvorrichtung 22 anhand von Verbindungsmitteln 24, wie insbesondere Schrauben und Muttern 24, mit dem Tauchkolben 12 verbunden, vorzugsweise verschraubt, ist. Insbesondere befindet sich ein Endbereich 26 des achsseitigen Bereichs 18 des Luftbalgs 14 zwischen der Klemmvorrichtung 22 und dem Tauchkolben 12, wodurch der Endbereich 26 des Luftbalgs 14 zwischen der Klemmvorrichtung 22 und dem Tauchkolben 12 eingeklemmt wird. Somit wird eine feste, jedoch lösbare Verbindung zwischen dem Luftbalg 14 und dem Tauchkolben 12 sichergestellt.

Der Tauchkolben 12 ist ein herkömmlicher Tauchkolben, wie er in herkömmlichen Luftfedern 10 eingesetzt wird. Die grundlegende Ausgestaltung des Luftbalgs 14 ist ebenfalls herkömmlicher Art, wie sie aus herkömmlichen Luftfedern 10 bekannt ist, wobei der Luftbalg 14 in einfacher Weise von dem Tauchkolben 12 entfernt werden kann, indem beispielsweise die Schrauben und Muttern 24 zumindest teilweise gelöst werden und die Klemmvorrichtung 22 von dem Tauchkolben 12 beabstandet wird. Folglich wird der Endbereich 26 des Luftbalgs 14 nicht mehr zwischen der Klemmvorrichtung 22 und dem Tauchkolben 12 eingeklemmt, und der Luftbalg 14 kann entfernt sowie beispielsweise durch einen neuen Luftbalg 14 ersetzt werden.

Erfindungsgemäß ist der Mittelabschnitt 17 verstärkt bzw. versteift. Diese Verstärkung und/oder Versteifung erfolgt gemäß Darstellung in Fig. 1 durch eine Einlagerung von Gewebelagen 31 oder Verstärkungslagen 30 in den Mittelabschnitt 17, wobei sich die Gewebelagen 31 und/oder Verstärkungslagen 30 vorzugsweise über die gesamte Bauhöhe des Luftbalgs 14 in vollständig eingefederter Position erstrecken. Diese Bauhöhe des Luftbalgs 14 in der vollständig eingefederten Position ist weitgehend identisch mit demjenigen Bereich des Luftbalgs 14, der durch die Ein- und/oder Ausfederbewegung des Luftbalgs 14 an der gleichen Stelle verbleibt und nicht nach innen umgefaltet wird, und auf dem Tauchkolben 12 zum Abrollen kommt.

Die Gewebelagen 31 und die Verstärkungslagen 30 bewirken, dass sich die radiale Steifheit des Luftbalgs 14 erhöht, wodurch sich dieser sowohl bei der Einfeder- als auch bei der Ausfederbewegung des Luftbalgs 14 hinsichtlich seines Durchmessers nicht verändert. Dabei bleibt auch der Durchmesser des Luftbalgs 14 an dieser Stelle, auch ohne Vorliegen von Ein- oder Ausfederbewegungen, zumindest annähernd konstant. Als Gewebelagen 31 kommen hierbei insbesondere Metallgewebe, Kunststoffgewebe und Textilgewebe in Frage, wobei diese auch in beliebigen Kombinationen verwendet werden können.

Der Mittelabschnitt 17 ist üblicherweise -jedoch nicht zwangsweise - aus Gummi gebildet, in den die Gewebelagen 31 oder Verstärkungslagen 30 eingebettet sind. Alternativ oder zusätzlich können in den Gummi auch elastische Versteifungslagen 40 eingebettet sein. Diese elastischen Versteifungslagen 40 sind beispielsweise aus Kunststoff- oder Metallfolien gebildet und dienen ebenfalls dazu, die radiale Steifheit des Luftbalgs 14 zu erhöhen. Wie aus Fig. 1 ersichtlich, wird durch das Einbetten bzw. Einlagern der Gewebelagen 31, Verstärkungslagen 30 und/oder der elastischen Versteifungslagen 40 die Wandstärke des Mittelabschnitts 17 vergrößert, so dass der Mittelabschnitt 17 eine größere Wandstärke aufweist als der restliche Luftbalg 14, beispielsweise im achsseitigen Bereich 18 oder im aufbauseitigen Bereich 16.

Eine Verstärkung bzw. Versteifung des Mittelabschnitts 17 kann auch dadurch erzielt werden, dass dieser mehrlagig aufgebaut ist, was jedoch in den Figuren nicht eigens dargestellt ist.

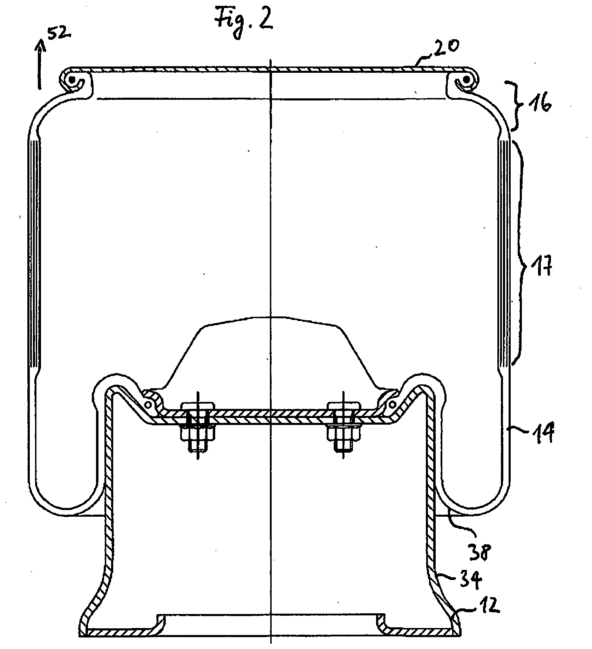

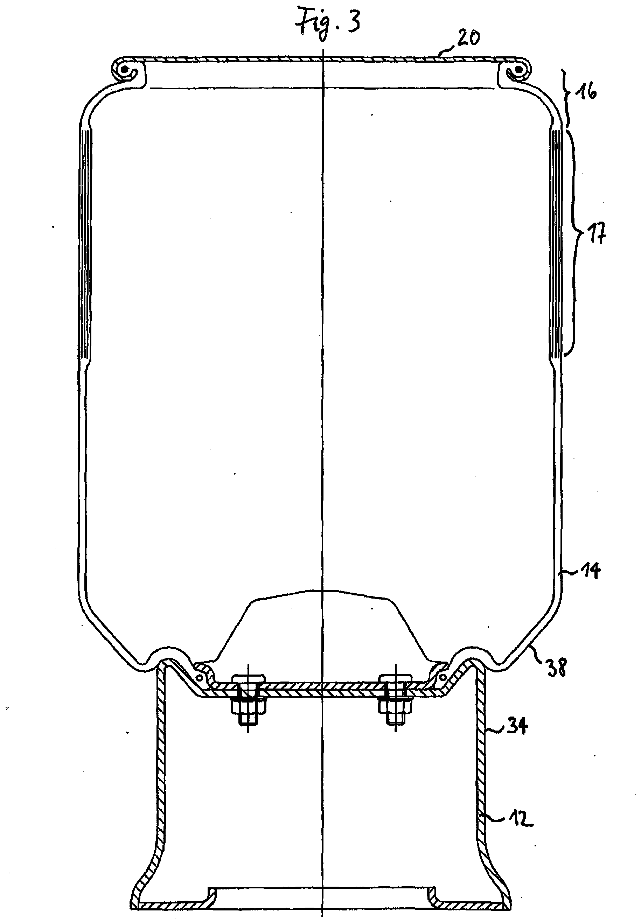

Wenn die den Luftbalg 14 enthaltende Luftfeder 10, von ihrer in Fig. 1 dargestellten ersten, vollständig eingefederten, Position ausgehend, ausgefedert wird und über eine in Fig. 2 dargestellte, teilweise eingefederte, Position in die in Fig. 3 dargestellte zweite, vollständig ausgefederte, Position übergeht, wird eine Oberfläche 38 des Luftbalgs 14 auf einer Oberfläche 34 des Tauchkolbens 12 abgerollt. Bei diesem Ausfeder- bzw. Abrollvorgang ändert sich der Durchmesser des Luftbalgs 14 im Bereich des Mittelabschnitts 17 nicht oder zumindest nicht wesentlich. Insbesondere wird bei einer solchen Ausfederbewegung durch die erfindungsgemäße Verstärkung und/oder Versteifung des Mittelabschnitts 17 verhindert, dass sich der Mittelabschnitt 17 ungewollt nach innen einrollt bzw. einfaltet. Dadurch wird außerdem begünstigt, dass sich der zwischen dem Mittelabschnitt 17 und dem abseitigen Bereich 18 befindliche Teil des Luftbalgs 14 ordnungsgemäß entlang des Tauchkolbens 12 abrollt bzw. beim Einfedern aufrollt. Beim Verladen eines Anhängers mit einer Luftfeder 10 auf beispielsweise einen Eisenbahnwaggon wird in der Regel eine Kraft parallel zu einer Zugrichtung 52 - also nach oben - angelegt, wobei aufgrund der Gewichtskraft der Achse insbesondere der Luftbalg 14 vollständig ausgedehnt bzw. gestreckt wird und sich dadurch in die zweite, vollständig ausgefederte, Position bewegt. Dadurch erreicht der Luftbalg 14 beim Verladen des Anhängers seine maximale Länge, wobei die Achse vorzugsweise mittels der Luftfeder 10 gehalten und dadurch der Luftbalg 14 im Wesentlichen vollständig gestreckt wird.

Wird der Aufbau des Anhängers wieder auf die Achse gesetzt, das heißt, drückt die Gewichtskraft des Aufbaus entgegen der Zugrichtung 52 den aufbauseitigen Bereich 16 des Luftbalgs 14 zu der Achse hin, wird der achsseitige Bereich 18 des Luftbalgs 14 wieder in Richtung auf den Deckel 20 zubewegt. Durch die Versteifung bzw. Verstärkung des Luftbalgs 14 im Bereich des Mittelabschnitts 17 wird erreicht, das während dieses Einfedervorgangs die Oberfläche 38 des Luftbalgs 14 auf der Oberfläche 34 des Tauchkolbens 12 abrollt und es zu keiner Einfaltung bzw. Einknickung des Luftbalgs 14 im Bereich des Mittelabschnitts 17 kommt. Somit wird erfindungsgemäß ein einfaches Verladen eines Anhängers erreicht, wobei keine komplizierte Ausgestaltung des Tauchkolbens 12, beispielsweise als zweiteiliger Tauchkolben oder als zerlegbarer Tauchkolben, erforderlich ist, sondern ein kostengünstig herstellbarer einteiliger Tauchkolben verwendet werden kann.

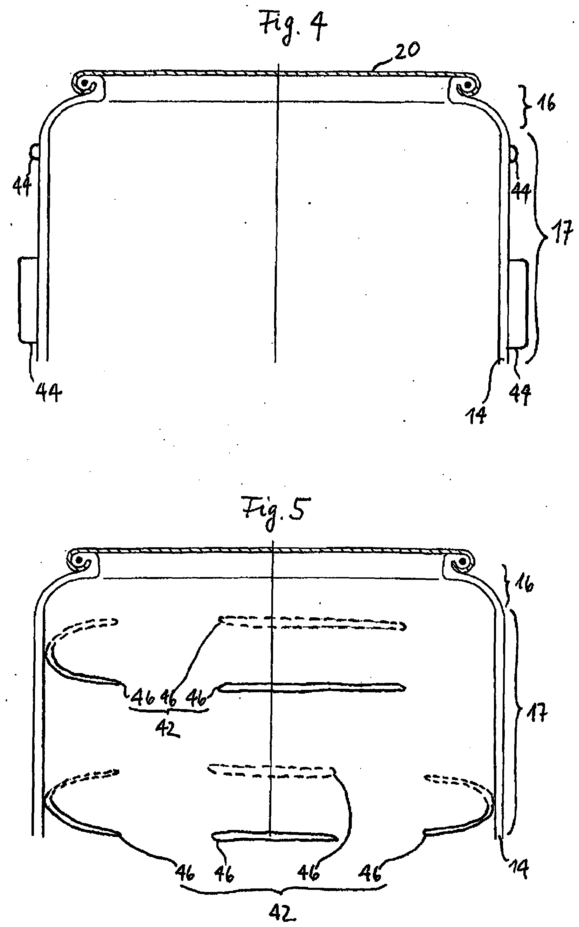

Die Fig. 4 - 6 zeigen erfindungsgemäße Ausführungsformen der Erfindung. In diesen Figuren sind gleiche oder ähnliche Teile mit gleichen bzw. ähnlichen Bezugszeichen versehen, und zur Vermeidung von Wiederholungen wird auf deren erneute Erläuterung verzichtet. Die hinsichtlich der ersten Ausführungsform getroffenen Äußerungen gelten auch für die weiteren Ausführungsformen, außer dies ist ausdrücklich anders dargestellt oder verbietet sich aus technischen Gründen von selbst.

In Fig. 4 sind eine erste und eine zweite Ausführungsform des erfindungsgemäßen Luftbalgs 14 dargestellt. Bei der ersten Ausführungsform, die im oberen Teil der Fig. 4 dargestellt ist, ist ein Ring 44 auf der Außenseite des Luftbalgs 14 - genauer gesagt auf dessen Mittelabschnitt 17 - angebracht. Die Anbringung erfolgt vorzugsweise durch Aufkleben des Rings 44 auf den Luftbalg 14. Der Ring 44 kann dabei beispielsweise aus Metall oder aus einem sehr rigiden Material gebildet sein. Sofern der Ring 44 aus einen vulkanisierbaren Material gebildet ist, kann der Ring 44 auch auf den Mittelabschnitt 17 aufvulkanisiert sein. Durch diesen im Mittelabschnitt 17 angebrachten Ring 44 wird eine Verstärkung bzw. Versteifung des Mittelabschnitts 17 bewirkt. Selbstverständlich können auch mehrere dieser Ringe 44 angebracht werden, wodurch die Verstärkungswirkung vergrößert, gegebenenfalls auch lokal dosiert werden kann. Eine ähnliche Verstärkungswirkung kann gemäß einer dritten Ausführungsform, die hier im unteren Teil von Fig. 4 dargestellt ist, erzielt werden. Auch hier ist ein Ring 44 an der Außenseite des Mittelabschnitts 17 angebracht. Dieser Ring ist im Gegensatz zu dem im oberen Teil von Fig. 4 gezeigten Ring mit einer deutlich größeren axialen Erstreckung ausgebildet, weshalb man bei diesem Ring 44 auch von einem Zylinder sprechen kann. Auch mit einem derartigen Ring kann eine gute Verstärkungs- bzw. Versteifungswirkung des Luftbalgs 14 im Mittelabschnitt 17 erzielt werden.

Im oberen Teil von Fig. 5 ist eine dritte Ausführungsform des erfindungsgemäßen Luftbalgs dargestellt. Zur Verstärkung sind in den Mittelabschnitt 17 drei - hier gleichmäßig in Umfangsrichtung beabstandete und zur Verdeutlichung perspektivisch dargestellte - Ringsegmente 46 an der Innenseite des Luftbalgs 14 in dessen Mittelabschnitt 17 angebracht. Die drei in einer Horizontalebene angebrachten Ringsegmente 46 bilden dabei ein Verstärkungselement 42. Durch diese Art der Ausgestaltung des Verstärkungselements 42 als drei Ringsegmente 46 kann einerseits der Mittelabschnitt 17 mit einer großen radialen Steifheit versehen werden, wobei andererseits diejenigen Abschnitte in Umfangsrichtung des Mittelabschnitts 17, die nicht mit einem Ringsegment 46 bedeckt sind, eine höhere Flexibilität aufweisen.

Im unteren Teil von Fig. 5 ist eine vierte Ausführungsform des erfindungsgemäßen Luftbalgs 14 dargestellt. Hier bilden vier in Umfangsrichtung voneinander gleichmäßig beabstandete und wiederum perspektivisch dargestellte Ringsegmente 46, welche alle in der gleichen Horizontalebene angeordnet sind, ein Verstärkungselement 42. Der im Hinblick auf die vierte Ausführungsform beschriebene Effekt der radialen Steifigkeit einerseits und der gewissen Flexibilität andererseits ist bei dieser Ausführungsform noch verstärkt ausgeprägt.

Es ist selbstverständlich möglich, dass sowohl bei der vierten als auch bei der fünften Ausführungsform mehrere der jeweils aus Ringsegmenten 46 gebildeten Verstärkungselemente 42 übereinander - also in Axialrichtung des Luftbalgs - angeordnet sind, um die Versteifungs- bzw. Verstärkungswirkung im Mittelabschnitt 17 zu verbessern. Dabei können die einzelnen Verstärkungselemente 42 in der gleichen Winkellage wie die benachbarten angeordnet sein, oder die Verstärkungselemente 42 sind gegenüber dem jeweils benachbarten Verstärkungselement 42 um einen bestimmten Winkel versetzt angeordnet, je nach dem, welche Gestaltung der steifen und flexiblen Zonen des Luftbalgs 14 in der betreffenden Ausführungsform gewünscht ist. Ein gleicher Winkelabstand in Umfangsrichtung ist nicht zwingend erforderlich.

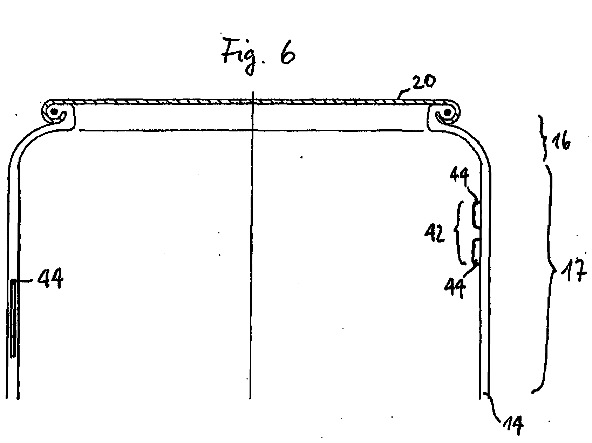

In Fig. 6 ist auf der linken Seite eine fünfte Ausführungsform dargestellt, während deren rechte Seite eine siebte Ausführungsform zeigt. Gemäß der sechsten Ausführungsform ist ein zylinderförmiges Verstärkungselement 42 in den Mittelabschnitt 17 einvulkanisiert, so dass es vollständig von dem Material des Mittelabschnitts 17 des Luftbalgs 14 umschlossen ist.

Bei der in Fig. 6 rechts dargestellten sechsten Ausführungsform ist ein Verstärkungselement 42 in Form von zwei Ringen 44 an der Innenseite des Mittelabschnitts 17 des Luftbalgs 14 angebracht, insbesondere angeklebt oder anvulkanisiert. Selbstverständlich können - ebenso wie bei der sechsten Ausführungsform - mehrere Verstärkungselemente 42 vorgesehen sein. Jedes Verstärkungselement 42 kann auch mehr als nur zwei Ringe 44 umfassen. Die Ringe 44 sind dabei vorzugsweise aus einem elastischen, rückstellenden Material, wie beispielsweise einem geeigneten Kunststoff oder Metall.

Es versteht sich, dass die vorstehend erläuterten Mittel zum Verstärken bzw. Versteifen des Mittelabschnitts 17 nicht nur in der Weise eingesetzt werden können, wie sie in den jeweiligen Ausführungsformen beschrieben wurden, sondern dass diese Verstärkungsmittel auch beliebig miteinander kombiniert werden können. So können beispielsweise Ringe mit Ringsegmenten kombiniert werden, und es können auch zusätzlich noch Gewebelagen oder Verstärkungslagen in den Mittelabschnitt 17 eingebettet oder darauf angebracht sein.

Es wird der Luftbalg 14 zunächst vorgefertigt, wonach er derart geformt wird, dass sein achsseitiger Bereich 18 so ausgestaltet wird, dass dieser achsseitige Bereich 18 an einem Tauchkolben 12 einer Luftfeder 10 angeordnet und durch eine Ein- bzw. Ausfederbewegung zwischen einer ersten, eingefederten Position und einer zweiten, ausgefederten Position bewegt werden kann. Der Mittelabschnitt 17 ist dabei derjenige Bereich des Luftbalgs 14, der durch die Ein- und Ausfederbewegung nicht oder zumindest nicht wesentlich ein- oder ausgerollt wird. Außerdem wird zumindest ein Teil des Mittelabschnitts 17 verstärkt und/oder versteift, indem beispielsweise Gewebe- und/oder Verstärkungslagen am Mittelabschnitt 17 angebracht oder in diesen eingebettet werden, oder indem Verstärkungselemente, wie beispielsweise Ringe oder Ringsegmente, an ihm angebracht bzw. in ihn eingebettet werden. Schließlich wird der Luftbalg 14 einer Endbearbeitung unterzogen, was oft auch als "Finishing" bezeichnet wird.

### Bezugszeichenliste

- 10: Luftfeder
- 12: Tauchkolben
- 14: Luftbalg
- 16: aufbauseitiger Bereich
- 17: Mittelabschnitt
- 18: achsseitiger Bereich
- 20: Deckel
- 22: Klemmvorrichtung
- 24: Verbindungsmittel/Schrauben und Muttern
- 26: Endbereich
- 30: Verstärkungslage
- 31: Gewebelage
- 34: Oberfläche des Tauchkolbens
- 38: Oberfläche des Luftbalgs
- 40: Versteifungslage
- 42: Verstärkungselement
- 44: Ring
- 46: Ringsegment
- 52: Zugrichtung

## Patentansprüche

1. Luftbalg (14) für eine Luftfeder (10) insbesondere eines Nutzfahrzeugs, mit einem achsseitigen Bereich (18), einem aufbauseitigen Bereich (16) und einem dem aufbauseitigen Bereich (16) benachbarten Mittelabschnitt (17), wobei
- der achsseitige Bereich (18) an einem Tauchkolben (12) anordenbar und durch eine Ein- bzw. Ausfederbewegung zwischen einer ersten, eingefederten, Position und einer zweiten, ausgefederten, Position bewegbar ist, wobei der Mittelabschnitt (17) durch die Ein- bzw. Ausfederbewegung nicht ein- oder ausgerollt wird, und
- zumindest ein Teil des Mittelabschnitts (17) verstärkt und/oder versteift ist,
**dadurch gekennzeichnet, dass**
der Mittelabschnitt (17) aus Gummi aufgebaut ist, an dem zumindest ein Verstärkungselement (42) anvulkanisiert ist, und dass
das zumindest eine Verstärkungselement (42) aus mehreren Ringen (44) oder Ringsegmenten (46) gebildet ist,
wobei der Mittelabschnitt (17) derjenige Teil des Luftbalgs (14) ist, der durch die Ein- bzw. Ausfederbewegung nicht ein- oder ausgerollt werden kann,
wobei der Mittelabschnitt (17) im Wesentlichen über seine gesamte Bauhöhe verstärkt und/oder versteift ist.

2. Luftbalg (14) nach Anspruch 1,
wobei die Verstärkung und/oder Versteifung so ausgelegt ist, dass sich der Durchmesser des Luftbalgs (14) im Mittelabschnitt (17) im Zuge der Ein- bzw. Ausfederbewegung nicht wesentlich ändert.

3. Luftbalg (14) nach einem der vorhergehenden Ansprüche,
wobei der Mittelabschnitt (17) eine größere Wandstärke aufweist als der restliche Luftbalg (14).

4. Luftbalg (14) nach einem der vorhergehenden Ansprüche,
wobei der Mittelabschnitt (17) mehrlagig aufgebaut ist.

5. Luftbalg (14) nach einem der vorhergehenden Ansprüche,
wobei der Mittelabschnitt (17) mit Gewebelagen (31) verstärkt ist.

6. Luftbalg (14) nach einem der vorhergehenden Ansprüche,
wobei der Mittelabschnitt (17) zumindest bereichsweise mit Gewebelagen (31) oder Verstärkungslagen (30) verstärkt ist, welche die radiale Steifheit des Luftbalgs (14) erhöhen.

7. Luftbalg (14) nach einem der vorhergehenden Ansprüche,
wobei der Mittelabschnitt (17) aus Gummi aufgebaut ist, in den elastische Versteifungslagen (40) eingebettet sind.

8. Luftbalg (14) nach einem der vorhergehenden Ansprüche,
wobei der Mittelabschnitt (17) aus Gummi aufgebaut ist, in den zumindest ein Verstärkungselement (42) einvulkanisiert ist.

9. Luftbalg (14) nach einem der vorhergehenden Ansprüche,
wobei ein Ring (44) aus einem Metall in den Mittelabschnitt (17) eingearbeitet ist.

10. Luftfeder (10) mit einem Tauchkolben (12) und einem Luftbalg (14) nach einem der vorhergehenden Ansprüche.

11. Luftfeder (10) nach Anspruch 10, wobei der Tauchkolben (12) einteilig ausgebildet ist.

## Claims

1. Air bellows (14) for an air spring (10), in particular of a commercial vehicle, having an axle-side region (18), a body-side region (16) and a central section (17) adjacent to the body-side region (16), wherein
- the axle-side region (18) can be arranged on a plunger (12) and can be moved by a spring-in or spring-out movement between a first, sprung-in, position and a second, sprung-out, position, the centre section (17) not being rolled in or out by the spring-in or spring-out movement, and
- at least a part of the central section (17) is reinforced and/or stiffened,
**characterized in that**
the central section (17) is made of rubber to which at least one reinforcing element (42) is vulcanised, and **in that**
the at least one reinforcing element (42) is formed of a plurality of rings (44) or ring segments (46),
wherein the central section (17) is that part of the air bellows (14) which cannot be rolled in or out by the springing-in or springing-out movement,
wherein the centre section (17) is reinforced and/or stiffened over substantially its entire height.

2. Air bellows (14) according to claim 1,
wherein the reinforcement and/or stiffening is such that the diameter of the air bellows (14) in the central section (17) does not change substantially in the course of the inward or outward spring movement.

3. Air bellows (14) according to any one of the preceding claims,
wherein the central section (17) has a greater wall thickness than the rest of the air bellows (14).

4. Air bellows (14) according to any one of the preceding claims,
wherein the central portion (17) is of multi-layer construction.

5. Air bellows (14) according to any one of the preceding claims,
wherein the central section (17) is reinforced with fabric layers (31).

6. Air bellows (14) according to any one of the preceding claims,
wherein the central section (17) is reinforced, at least in some areas, with fabric layers (31) or reinforcing layers (30) which increase the radial stiffness of the air bellows (14).

7. Air bellows (14) according to one of the preceding claims,
wherein the central section (17) is constructed of rubber in which elastic stiffening layers (40) are embedded.

8. Air bellows (14) according to any one of the preceding claims,
wherein the central section (17) is constructed of rubber in which at least one reinforcing element (42) is vulcanised.

9. Air bellows (14) according to any one of the preceding claims,
wherein a ring (44) made of a metal is incorporated in the central section (17).

10. Air spring (10) comprising a plunger (12) and an air bellows (14) according to any one of the preceding claims.

11. Air spring (10) according to claim 10, wherein the plunger (12) is formed in one piece.

## Revendications

1. Soufflet à air (14) pour un ressort pneumatique (10), en particulier d'un véhicule utilitaire, comprenant une zone (18) côté essieu, une zone (16) côté caisse et une portion centrale (17) adjacente à la zone (16) côté caisse,
dans lequel
- la zone (18) côté essieu est susceptible d'être agencée sur un piston plongeur (12) et est mobile par un mouvement de compression ou de détente entre une première position comprimée et une seconde position détendue, la portion centrale (17) n'étant pas enroulée ou déroulée par le mouvement de compression ou de détente, et
- au moins une partie de la portion centrale (17) est renforcée et/ou rigidifiée,
**caractérisé en ce que**
la portion centrale (17) est conçue en caoutchouc sur lequel est attaché au moins un élément de renforcement (42) par vulcanisation, et **en ce que**
ledit au moins un élément de renforcement (42) est formé de plusieurs anneaux (44) ou segments d'anneau (46),
la portion centrale (17) étant la partie du soufflet à air (14) qui ne peut pas être enroulée ou déroulée par le mouvement de compression ou de détente,
la portion centrale (17) étant renforcée et/ou rigidifiée sensiblement sur toute sa hauteur structurelle.

2. Soufflet à air (14) selon la revendication 1,
dans lequel le renforcement et/ou la rigidification est conçu(e) de telle sorte que le diamètre du soufflet à air (14) ne se modifie pas sensiblement dans la portion centrale (17) au cours du mouvement de compression ou de détente.

3. Soufflet à air (14) selon l'une des revendications précédentes,
dans lequel la portion centrale (17) présente une épaisseur de paroi supérieure à celle du reste du soufflet à air (14).

4. Soufflet à air (14) selon l'une des revendications précédentes,
dans lequel la portion centrale (17) est conçue en plusieurs couches.

5. Soufflet à air (14) selon l'une des revendications précédentes,
dans lequel la portion centrale (17) est renforcée par des couches de tissu (31).

6. Soufflet à air (14) selon l'une des revendications précédentes,
dans lequel la portion centrale (17) est renforcée au moins localement par des couches de tissu (31) ou par des couches de renforcement (30) qui augmentent la rigidité radiale du soufflet à air (14).

7. Soufflet à air (14) selon l'une des revendications précédentes,
dans lequel la portion centrale (17) est conçue en caoutchouc dans lequel sont noyées des couches de rigidification élastiques (40).

8. Soufflet à air (14) selon l'une des revendications précédentes,
dans lequel la portion centrale (17) est conçue en caoutchouc dans lequel est intégré au moins un élément de renforcement (42) par vulcanisation.

9. Soufflet à air (14) selon l'une des revendications précédentes,
dans lequel un anneau (44) en un métal est enfoncé dans la portion centrale (17).

10. Ressort pneumatique (10) comprenant un piston plongeur (12) et un soufflet à air (14) selon l'une des revendications précédentes.

11. Ressort pneumatique (10) selon la revendication 10,
dans lequel le piston plongeur (12) est réalisé d'un seul tenant.
